**Europäisches Patentamt**

(19) **European Patent Office**

**Office européen des brevets**

(11) Numéro de publication: **0 120 786**
**B1**

(12) # FASCICULE DE BREVET EUROPEEN

(45) Date de publication du fascicule du brevet:
**19.11.87**

(51) Int. Cl.⁴: **H 04 L 27/22**

(21) Numéro de dépôt: **84400595.9**

(22) Date de dépôt: **23.03.84**

(54) **Chaîne de réception hyperfréquence comportant un dispositif de démodulation directe en hyperfréquence.**

(30) Priorité: **25.03.83 FR 8304983**

(43) Date de publication de la demande:
**03.10.84 Bulletin 84/40**

(45) Mention de la délivrance du brevet:
**19.11.87 Bulletin 87/47**

(84) Etats contractants désignés:
**DE FR GB IT**

(56) Documents cités:
**EP - A - 0 034 973**
**BE - A - 892 690**
**DE - A - 2 800 242**
**FR - A - 2 353 186**
**US - A - 4 084 137**

**FUJITSU, vol. 11, no. 4, décembre 1975, pages 57-80, Kawasaki, JP; T. YAMASHITA et al.: "Synchronous phase demodulators for high speed quadrature PSK transmission systems"**
**PATENTS ABSTRACTS OF JAPAN, vol. 5, no. 27, 18 février 1981, page 149 E 46**

(73) Titulaire: **ALCATEL THOMSON FAISCEAUX HERTZIENS, 55, rue Greffulhe, F-92300 Levallois-Perret Cédex (FR)**

(72) Inventeur: **Bursztejn, Jacques, THOMSON-CSF SCPI 173, bld Haussmann, F-75379 Paris Cedex 08 (FR)**
Inventeur: **Part, Michel, THOMSON-CSF SCPI 173, bld Haussmann, F-75379 Paris Cedex 08 (FR)**

(74) Mandataire: **Weinmiller, Jürgen et al, Lennéstrasse 9 Postfach 24, D-8133 Feldafing (DE)**

## Description

L'invention se rapporte à un récepteur hyperfréquence selon le préambule de la revendication 1. Un tel récepteur est connu, par exemple à partir du document US-A 4 084 137. Ce document décrit un étage d'entrée haute fréquence pour des signaux codés en code multidimensionel. Cet étage est muni d'une commande automatique (et grossière) de gain et il est suivi d'un circuit de démodulation et d'un étage d'amplification en bande de base muni également d'une commande automatique (fine) de gain. A cause du codage utilisé, l'amplification en bande de base doit obligatoirement transmettre le continu et de ce fait la variation de gain de cet amplificateur est très limitée.

Il a aussi été décrit dans la revue FUJITSU, vol. 11, no 4, de décembre 1975 KAWASAKI, pages 63 à 67, dans un article intitulé «Synchronous phase demodulators for high speed quadrature PSK transmission systems» une chaîne de réception hyperfréquence de structure plus simple, qui permet de réaliser à partir d'un signal hyperfréquence reçu une démodulation avec un nombre réduit d'éléments, les circuits à fréquence intermédiaire étant supprimés.

Dans cette structure, il n'est pas prévu de moyen pour maintenir à la sortie de la chaîne de réception un niveau constant. Or il est essentiel de prévoir une telle commande de niveau.

Une solution évidente à ce problème consiste à réaliser une commande automatique de gain en amont du démodulateur, sur le signal hyperfréquence reçu. Mais une telle solution conduit à utiliser des diodes PIN hyperfréquence variables, insérées entre des amplificateurs hyperfréquence. De plus la dynamique du signal d'entrée étant de l'ordre de 55 dB, il est nécessaire que la dynamique du circuit de commande soit au moins égale à 55 dB ce qui conduit dans une telle solution à un circuit coûteux à placer en amont du démodulateur.

Le problème résolu par la présente invention est la réalisation d'une chaîne de réception hyperfréquence à démodulation directe comportant, associée aux autres fonctions, la fonction de commande automatique de gain, les éléments nécessaires à la réalisation de cette fonction étant des circuits classiques du commerce qui permettent de réduire le coût de la chaîne de réception dans son ensemble en lui conservant ses performances.

L'invention a pour but de proposer une chaîne telle que définie dans le préambule de la revendication 1, qui, par rapport audit document US, permet d'augmenter la variation de gain de l'amplificateur en bande de base et de ce fait permet de supprimer l'étage haute fréquence à gain variable. Ce but est atteint selon l'invention par le fait que le signal reçu comporte les signaux numériques sous forme embrouillée pour ne pas contenir de longues suites de 1 ou de 0, et que le signal reçu est appliqué directement au circuit de démodulation.

L'invention sera mieux comprise et d'autres caractéristiques apparaîtront à l'aide de la description qui suit en référence aux figures annexées.

La fig. 1 représente un schéma synoptique d'une chaîne de réception suivant l'invention;
la fig. 2 représente un schéma synoptique du dispositif de démodulation;
la fig. 3 représente un schéma de l'un des amplificateurs à CAG avec son circuit de commande;
la fig. 4 est un diagramme explicatif;
la fig. 5 représente un schéma de l'estimateur de phase 11 utilisé dans la chaîne de réception suivant l'invention;
les fig. 6 et 7 sont des tableaux explicatifs.

Le domaine de l'invention est la transmission radioélectrique d'informations numériques, la transmission étant réalisée par modulation d'une onde porteuse SHF pouvant être représentée par la composition de deux porteuses en quadrature modulées indépendamment. Il a été décrit, dans la demande de brevet français FR-A 2 476 947 au nom de la demanderesse, un dispositif de modulation linéaire dans lequel la modulation est réalisée directement sur la porteuse SHF, sans transposition en fréquence intermédiaire. Pour cela le dispositif de modulation numérique utilisé est linéaire pour le signal de modulation qui lui est appliqué.

L'objet de la présente demande est une chaîne de réception à démodulation directe en hyperfréquence intégrant toutes les fonctions nécessaires pour le traitement de signaux hyperfréquences modulés, tels qu'ils résultent par exemple de ce dispositif de modulation numérique linéaire.

Une telle démodulation directe en hyperfréquence pose un certain nombre de problèmes tant en ce qui concerne le système de démodulation proprement dit, c'est-à-dire le mélangeur, que la chaîne de réception dans son ensemble. En effet, le choix du type de mélangeurs utilisé, et les caractéristiques des signaux qui lui sont appliqués et donc les traitements nécessaires, sont interdépendants.

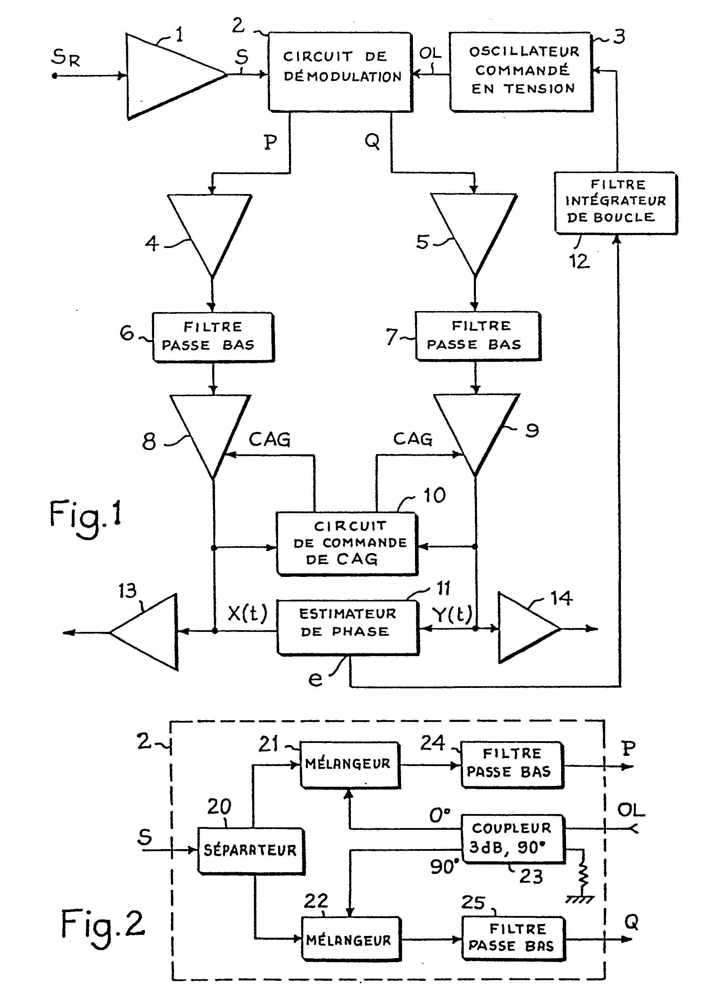

La fig. 1 représente le schéma synoptique d'un mode de réalisation de la chaîne de réception suivant l'invention. L'entrée recevant le signal reçu $S_R$ est reliée à l'entrée d'un amplificateur à faible bruit 1 dont la sortie est reliée à l'entrée de signal modulé S d'un circuit de démodulation 2. Dans le mode de réalisation décrit, le signal reçu est constitué de deux porteuses en quadrature de phase modulées par deux signaux numériques synchrones et formant un signal modulé à quatre états de phase. Ce circuit comporte également une entrée de signal d'oscillation locale OL reliée à la sortie d'un oscillateur commandé en tension 3. Ce mélangeur fournit sur ses deux sorties les signaux P et Q de modulation dans la bande de base. Les signaux P et Q sont appliqués aux entrées de deux préamplificateurs en vidéofréquence, respectivement 4 et 5. Les sorties de ces deux préamplificateurs sont respectivement reliées aux entrées de deux circuits de filtrage passe-bas 6 et 7 dont les sorties sont reliées aux entrées de deux amplificateurs à commande automatique de gain 8 et 9. Les sorties de ces amplificateurs qui fournissent les trains numériques démodulés X(t) et Y(t), sont reliées aux entrées de deux amplificateurs de sortie 13, 14, et aux entrées d'un circuit de commande automatique de gain dont les deux sorties sont reliées aux entrées de commande automatique de gain des amplificateurs 8 et 9. Les sorties de ces amplificateurs 8 et 9 sont également reliées aux entrées d'un circuit estimateur de phase 11 dont la sortie fournit un signal d'erreur e(t) appliqué à l'entrée d'un filtre intégrateur de boucle 12 dont la sortie est reliée à l'entrée de commande de fréquence de l'oscillateur commandé en tension 3.

Le fonctionnement de cette chaîne de réception est le suivant: le signal reçu qui traverse l'amplificateur à faible bruit 1 permet de maintenir le facteur de bruit à une valeur faible, 2.5 dB par exemple. Le mélangeur 2 est un mélangeur linéaire double symétrique dont des schémas plus détaillés seront donnés ci-après et qui délivre directement les deux signaux démodulés de base; les préamplificateurs en vidéofréquence ont un gain d'environ 10 dB, et précédent les filtres des signaux; les amplificateurs 8 et 9 à commande automatique de gain ont un gain fixe auquel s'ajoute une variation de gain commandable, par exemple 20 dB fixe et 50 dB variable par l'entrée de commande; ainsi les signaux appliqués à l'estimateur de phase 11 et aux amplificateurs de sortie 13 et 14 ont une amplitude crête constante.

La fig. 2 est un schéma de principe du circuit de démodulation 2. Pour un signal constitué de deux porteuses modulées en quadrature, le dispositif de démodulation 2 comporte: un séparateur 20 relié à l'entrée de signal S, et permettant de diviser le signal d'entrée en deux, les deux sorties du séparateur sont reliées aux entrées de deux mélangeurs identiques, 21 et 22. L'entrée de signal d'oscillation locale OL est reliée à l'entrée d'un coupleur 3 dB, 23, dont les sorties sont déphasées l'une par rapport à l'autre de 90°. Les deux sorties de ce coupleur 3 dB, 23, sont reliées aux secondes entrées des deux mélangeurs linéaires 21 et 22. La fréquence de l'oscillateur local est égale à la fréquence porteuse du signal reçu. Les mélangeurs 21 et 22 fournissent donc, après filtrage dans les filtres passe-bas 24 et 25 et dans la mesure où l'écart de phase entre le signal porteur et le signal d'oscillation locale est nul, les signaux démodulés P et Q.

Le signal reçu est de la forme:
Z(t) = ϱ(t) cos [ ω₀t + φ(t)] où φ(t) est la phase de modulation:

$$\varphi(t) = \frac{\pi}{4} + k(t)\,\frac{\pi}{2}.$$

Z(t) = X(t) cos ω₀(t) + Y(t) sin ω₀(t) en le décomposant sur deux porteuses en quadrature.

L'oscillateur local a la même fréquence que le signal et est de la forme L = 1 cosω₀t. Après le coupleur 23, les porteuses locales en quadrature sont:

$$L_1 = \frac{1}{\sqrt{2}} \cos \omega_0 t$$

$$L_2 = \frac{1}{\sqrt{2}} \sin \omega_0 t$$

Dans le premier mélangeur 21, le signal résultant du mélange est un produit de modulation ayant une composante du second degré sur chacune des diodes. Le filtrage passe-bas permet de restituer le signal numérique de modulation en bande de base en cos φ(t). De même le signal résultant du mélange dans le second mélangeur 22 et après filtrage passe bas, le signal numérique en bande de base en sin φ(t) est restitué.

Ce circuit peut être semblable à un circuit de modulation directe en hyperfréquence réalisé selon la même technologie, tel que celui décrit à titre d'exemple dans la demande de brevet mentionnée ci-dessus. Cependant, la qualité de la démodulation est très liée à la qualité du signal d'oscillation locale et donc à la précision de sa phase et à la qualité du coupleur d'oscillation locale: ce coupleur doit en effet présenter une très bonne stabilité en phase sur une large bande, et avoir un bon équilibre entre les deux bras de couplage. En conséquence, dans un mode de réalisation préféré de l'invention, le coupleur a été réalisé sur une plaquette différente de la plaquette supportant les autres éléments du circuit de démodulation, afin qu'aucun déséquilibre ne puisse être créé entre les deux bras de couplage.

Avec un tel circuit, le spectre démodulé est très voisin de celui émis. De plus, lorsque la puissance reçue varie, la forme du spectre démodulé se conserve.

Cependant le niveau en sortie du mélangeur est bien sûr fonction de la puissance reçue. En conséquence, pour maintenir un niveau constant à la sortie de la chaîne de réception, il est nécessaire de réaliser une commande automatique du gain de la chaîne de réception. Cette commande est un élément important de la chaîne de réception suivant l'invention.

Il n'est pas possible de réaliser cette commande de gain en jouant sur le niveau de l'oscillateur local 3. En effet, des variations commandées sur le niveau d'oscillateur local entrainent des déformations importantes du spectre du signal démodulé. De plus la variation du niveau du signal de sortie du démodulateur en fonction du niveau d'oscillateur n'est pas linéaire.

Cela impose donc de réaliser la commande automatique de gain soit en hyperfréquence en utilisant un amplificateur hyperfréquence à commande automatique de gain mais cette solution est chère, comme indiqué ci-dessus, soit en bande de base (vidéofréquence).

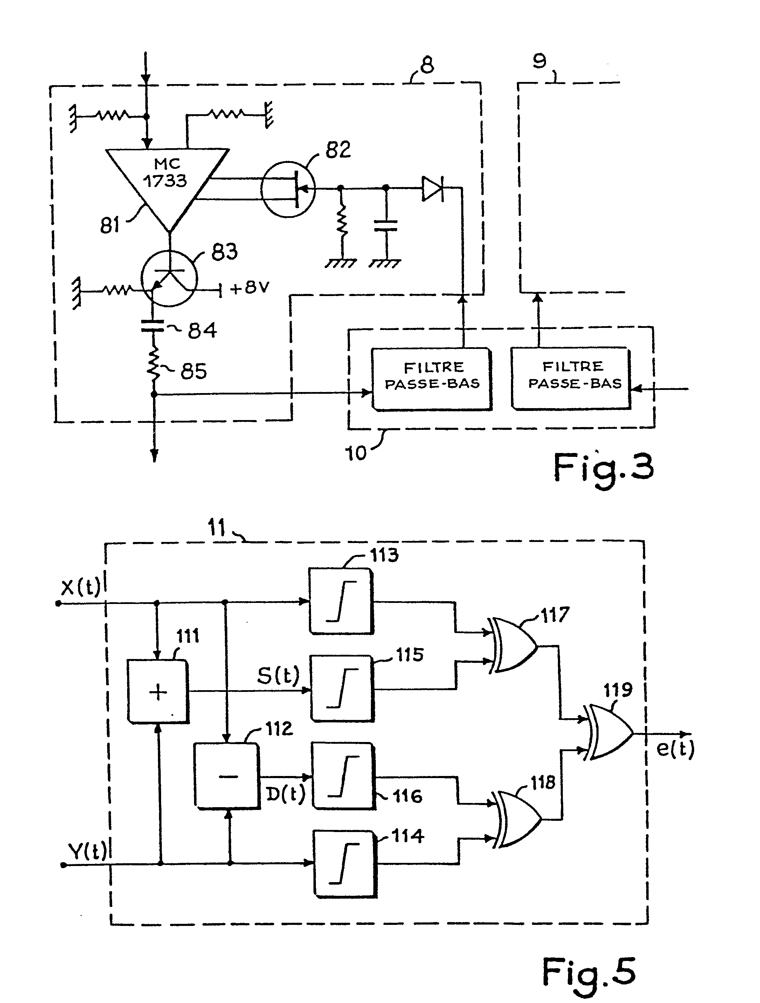

Dans la chaîne de réception suivant l'invention la commande automatique de gain est réalisée sur le signal démodulé en bande de base. Cela est rendu possible par le fait que les signaux de modulation, résultant du codage à l'émission, sont des signaux traités par «embrouillage», c'est-à-dire introduction de «1» ou de «0» judicieusement insérés dans le train numérique pour ne pas avoir de longues suites de 0 ou de 1. En conséquence, comme représenté sur la fig. 3, le circuit de commande 10 comporte un circuit intégrateur à filtres passe-bas, dont les signaux de sortie sont caractéristiques des variations de niveau des signaux démodulés. Les amplificateurs 8 et 9 à gain variable doivent avoir une bande passante suffisante. Les amplificateurs choisis dans l'exemple de réalisation représenté sont des amplificateurs différentiels MC 1733 à très large bande (120 MHz) 81. Ainsi ce même circuit est utilisé pour des débits numériques de 8,5 ou 34 Mbit/s. La commande de gain est réalisée par variation des résistances d'émetteur des transistors de ces amplificateurs différentiels au moyen de transistors FET 82 qui jouent le rôle de résistances variables. Enfin, pour sortir sous une impédance nulle en ayant une résistance de charge faible on utilise en sortie un transistor 83 monté en émetteur suiveur suivi d'une capacité 84 en série avec une résistance 85 de 50 $\Omega$.

L'estimateur de phase quant à lui a pour rôle d'obtenir une référence de phase stable afin d'extraire de façon correcte les différents sauts de phase porteurs de l'information par le circuit de démodulation. Dans le cas particulier de la démodulation directe en hyperfréquence, la récupération de porteuse par multiplication est bien entendue exclue. Par ailleurs les systèmes issus du type démodulateur-remodulateur sont aussi exclus du fait de leur coût et de la difficulté de réalisation.

En conséquence dans la chaîne de réception suivant l'invention avec démodulation directe, l'estimateur de phase fonctionne à partir d'un système de démodulation à boucle de COSTAS. Dans ce type de système, la tension d'erreur e nécessaire pour verrouiller la boucle de phase est obtenue directement à partir des trains démodulés X(t) et Y(t). En effet, il est possible d'obtenir, à partir de ces deux signaux, un signal d'erreur caractéristique du déphasage $\theta$ entre la porteuse reçue et le signal d'oscillation locale. Un exemple d'une telle boucle utilisant un estimateur de phase dit type «sin 4$\theta$» est utilisé dans un dispositif de démodulation décrit dans l'article de FUJITSU en référence ci-dessus.

Dans un mode de réalisation préféré du dispositif de démodulation, un estimateur plus simple, du type «signe de sin 4$\theta$», $\theta$ étant le déphasage entre la porteuse locale fournie par l'oscillateur 3 et la porteuse reçue est utilisé.

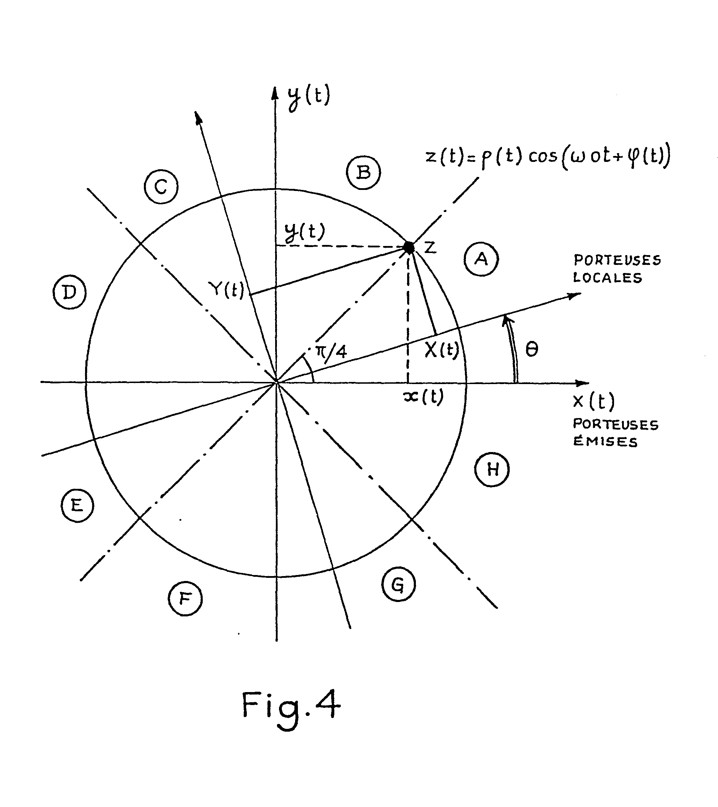

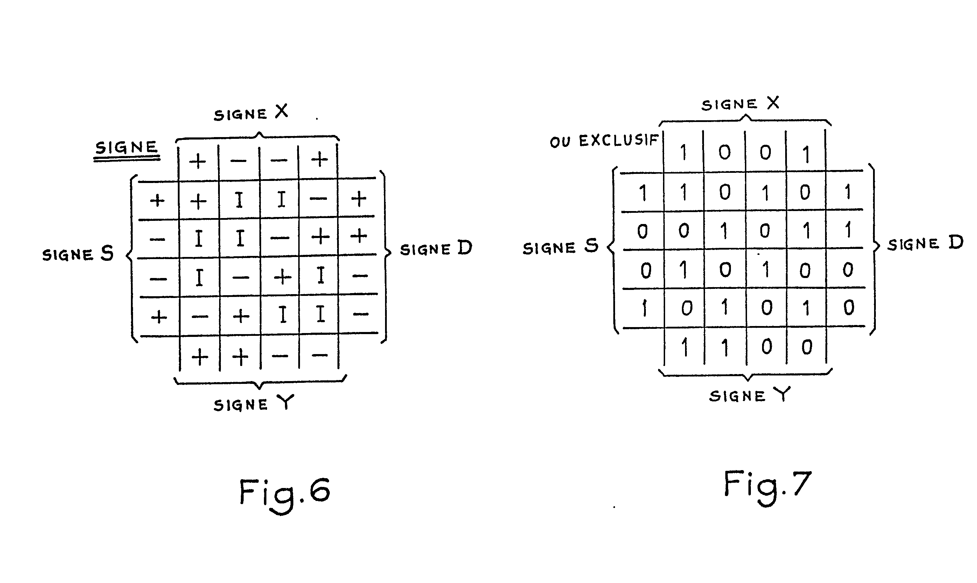

Le schéma représenté sur la fig. 4 permet de comprendre le fonctionnement de cet estimateur qui est représenté en détails sur la fig. 5.

Z(t) est le signal composite résultant de la combinaison des deux porteuses modulées en quadrature à l'émission
$$Z(t) = \varrho(t) \, [\cos (\omega_o t + \varphi(t))].$$

Soient x(t) et y(t) les signaux de modulation sur ces porteuses à l'émission, x(t) = y(t) dans l'exemple représenté et la phase de modulation est $\varphi = \frac{\pi}{4}$. Soient X(t) et Y(t) les signaux démodulés à la réception sur les porteuses en quadrature issues de l'oscillateur local, $\theta$ étant le déphasage entre les porteuses à l'émission et à la réception. Pour estimer ce déphasage, une fonction d'erreur est calculée. Si S(t) = X(t) + Y(t) et D(t) = X(t) – Y(t), il est possible de montrer que la fonction
$$X(t) \cdot Y(t) \cdot S(t) \cdot D(t) = + \tfrac{1}{2} \varrho^4(t) \sin 4\theta.$$

Cette fonction a donc une amplitude variable en fonction du temps et elle varie également en fonction de $\theta$ suivant sin 4$\theta$. A partir de cette fonction, il est possible d'obtenir un signal d'erreur en remarquant que sin 4$\theta$ change de signe lorsque $\theta$ passe d'un secteur de $\frac{\pi}{4}$ à un secteur adjacent, dans la figure déterminée par des axes orthogonaux représentatifs des porteuses émises en quadrature, donnant les valeurs x(t) et y(t), et les bissectrices de ces axes correspondant aux phases de modulation à l'émission. Soient A, B, C . . . H ces secteurs sur la fig. 4.

La fonction d'erreur e(t) = signe (+ ½ $\varrho^4(t)$ sin 4$\theta$) est positive dans les secteurs A, C, E, G et négative dans les secteurs B, D, F et H.

Ce signe est le résultat du produit des signes de différentes composantes X(t), Y(t), S(t) et D(t). Il serait donc possible de réaliser l'estimateur en utilisant des multiplicateurs. Cependant, la tension d'erreur qui serait obtenue aurait une amplitude variable avec l'amplitude du signal incident.

Dans un mode de réalisation préféré de l'invention, l'estimateur retenu est plus simple et permet d'obtenir une tension d'erreur indépendante de l'amplitude du signal incident.

En effet, le tableau de la fig. 6 indique le signe du produit X(t) · (t) · S(t) · D(t) en fonction des signes des différentes composantes. Certaines combinaisons, impossibles, sont indiquées par «I». Par exemple, lorsque X et Y sont positifs, il n'est pas possible que leur somme soit négative. De même lorsque X et Y sont négatifs il n'est pas possible que leur somme soit positive. Lorsque X est positif et Y négatif, la différence D = X – Y ne peut être négative etc. . . .

La fig. 7 représente le résultat de la fonction logique OU EXCLUSIF des variables signe X, signe Y, signe S et signe D où les valeurs des variables et de la fonction pour «signe positif» sont notées «1» et les mêmes valeurs pour «signe négatif» sont notées «0». En comparant ces deux tableaux, on remarque que pour les produits possibles des variables signe X, signe Y, signe S et signe D, la fonction OU EXCLUSIF est identique à la fonction signe du produit. D'où la structure de l'estimateur de phase 11 représentée sur la fig. 5.

Les signaux X(t) et Y(t), aux entrées de l'estimateur 11, sont reliées d'une part aux deux entrées d'un additionneur 111 dont la sortie délivre le signal somme, S(t) = X(t) + Y(t), et d'autre part aux deux entrées d'un soustracteur 112 dont la sortie délivre le signal différence D(t) = X(t) – Y(t). Les entrées X(t), Y(t) et les sorties S(t) et D(t) sont reliées aux entrées de circuits à seuils respectivement 113, 114, 115 et 116. Les sorties de ces circuits fournissent des signaux logiques «Haut» et «Bas» suivant que le signe des signaux à leurs entrées est positif ou négatif. Les sorties de ces circuits à seuils sont groupées deux à deux et réliés aux entrées de deux portes logiques «OU EXCLUSIF» 117 et 118 dont les sorties sont reliées à une troisième porte logique «OU EXCLUSIF» 119. La sortie de la porte 119 constitue la sortie de l'estimateur et délivre la tension d'erreur e(t) aux niveaux logiques «Haut» et «Bas» suivant que le produit, et donc sin 4θ, est positif ou négatif. Cet estimateur a été réalisé en technologie type ECL (Emitter-couplage logic) mais il serait également possible de le réaliser en technologie TTL.

Lorsque les porteuses émises et reçues sont en phase avec les porteuses locales le signal de sortie de l'estimateur e(t), présente, éventuellement, lors des transitions des signaux X(t) et Y(t), des transitions nettes. Par contre, lorsqu'une erreur de phase existe entre les porteuses reçues et les porteuses locales, des «pics» apparaissent dans le signal de sortie de l'estimateur qui traduisent les variations de phase d'un état de modulation à un autre état.

La sortie de l'estimateur 11 est, comme indiqué ci-dessus, reliée à l'entrée d'un filtre intégrateur de boucle 12 qui intègre ces «pics» pour constituer la tension d'erreur appliquée à l'entrée de commande de l'oscillateur commandé en tension.

L'invention n'est pas limitée au mode de réalisation décrit et représenté.

En particulier, le mode de réalisation décrit ci-dessus a été essayé pour un débit de transmission de 34 MBits/s, sur une fréquence porteuse de 2 GHz modulée en 4 phases. Toute autre combinaison est possible en particulier, la même chaîne de réception peut recevoir des débits inférieurs, 8 MBits/s par exemple. De même les fréquences porteuses peuvent être quelconques. Il est également possible d'adapter la chaîne de réception pour un système «agile» en fréquence, c'est-à-dire susceptible de fonctionner à différentes fréquences porteuses ou pour un système à étalement de spectre.

De plus, le système a été décrit ci-dessus pour un signal modulé à quatre états de phase. Cet exemple n'est évidemment pas limitatif et la chaîne de réception décrite est applicable à la réception de tout signal à modulation numérique qui peut se mettre sous la forme de deux porteuses en quadrature de phase, en particulier ceux qui résultent de la modulation à états discrets à 8 phases ou 16 états (16 QAM). Les trains numériques démodulés peuvent avoir plus de deux niveaux.

## Revendications

1. Récepteur hyperfréquence comportant un circuit (2) de démodulation d'un signal modulé résultant du mélange de deux porteuses en quadrature modulées par des signaux numériques, dont l'entrée est couplée à l'entrée de signal reçu, associé à un oscillateur (3) à la fréquence porteuse du signal reçu, commandable pour que la phase de la porteuse issue de l'oscillateur coïncide avec la phase du signal reçu, et délivrant les signaux numériques démodulés, et comportant en outre un estimateur de phase (11) à deux entrées couplées aux sorties de signaux numériques démodulés dont la sortie délivre un signal fonction de l'écart de phase e entre la porteuse reçue et la porteuse locale, cette sortie étant reliée à l'entrée de commande de l'oscillateur (3) par un filtre intégrateur de boucle (12), comportant en outre des moyens de commande automatique du niveau des signaux démodulés X(t) et Y(t), comportant des amplificateurs large bande (8, 9) dont les entrées de signal sont couplées aux sorties du circuit de démodulation (2), et qui comportent une entrée de commande automatique de gain, les sorties de ces amplificateurs étant reliées aux entrées d'un circuit de commande (10) comportant des moyens d'intégration, et dont les sorties sont reliées aux entrées de commande des amplificateurs (8, 9), caractérisée en ce que le récepteur est apte à recevoir des signeaux ($S_R$) qui comportent les signaux numériques sous forme embrouillée pour ne pas contenir de longues suites de 1 ou de 0, et que le signal reçu est appliqué directement au circuit de démodulation (2).

2. Chaîne de réception hyperfréquence selon la revendication 1, caractérisée en ce que l'estimateur de phase (11) est un estimateur à boucle réalisant la fonction signe du produit $X(t) \cdot Y(t) \cdot S(t) \cdot D(t)$, où S(t) et D(t) sont respectivement la somme et la différence des signaux numériques X(t) et Y(t).

3. Chaîne de réception hyperfréquence selon la revendication 2, caractérisée en ce que l'estimateur (11) comporte un sommateur (111) et un soustracteur (112), des circuits à seuils (113, 114, 115, 116) et un circuit logique (117, 118, 119) réalisant la fonction «OU EXCLUSIF» des signaux de sortie des circuits à seuils.

## Patentansprüche

1. Mikrowellenempfänger mit einem Kreis (2) zur Demodulation eines Signals, das aus der Mischung zweier in Quadratur liegender und durch digitale Signale modulierter Träger resultiert, wobei der Eingang des Kreises an den Empfangssignaleingang gekoppelt ist und der Kreis einem Oszillator (3) zugeordnet ist, der mit der Trägerfrequenz des Empfangssignales schwingt und so steuerbar ist, dass die Phase des vom Oszillator gelieferten Trägers mit der Phase des Empfangssignals zusammenfällt, wobei der Kreis (2) demodulierte digitale Signale liefert und der Mikrowellenempfänger ausserdem einen Phasenschätzkreis (11) aufweist, dessen beide Eingänge die demodulierten digitalen Signale empfangen und dessen Ausgang ein Signal liefert, das vom Phasenabstand e zwischen dem empfangenen Träger und dem örtlichen Träger abhängt, wobei dieser Ausgang an den Steuereingang des Oszillators (3) über einen Schleifenintegrationsfilter (12) angeschlossen ist, wobei der Empfänger ausserdem Mittel zur automatischen Steuerung des Pegels der demodulierten Signale X(t) und Y(t) mit Breitbandverstärkern (8, 9) besitzt, deren Signaleingänge an die Ausgänge des Demodulationskreises (2) gekoppelt sind und die einen Eingang zur automatischen Verstärkungsregelung besitzen, während die Ausgänge dieser Verstärker an die Eingänge eines Steuerkreises (10) angeschlossen sind, der ein Integrationsmittel besitzt und dessen Ausgänge an die Steuereingänge der Verstärker (8, 9) angeschlossen sind, dadurch gekennzeichnet, dass der Empfänger zum Empfang von Signalen $(S_R)$ geeignet ist, die die digitalen Signale in verschlüsselter Form enthalten, um keine langen Folgen von 1 oder von 0 aufzuweisen, und dass das Empfangssignal unmittelbar an den Demodulationskreis (2) angelegt wird.

2. Mikrowellenempfangskette nach Anspruch 1, dadurch gekennzeichnet, dass der Phasenschätzkreis (11) ein Schleifenschätzkreis ist, der die Funktion Vorzeichen des Produkts $X(t) \cdot Y(t) \cdot S(t) \cdot D(t)$ realisiert, in der $S(t)$ und $D(t)$ die Summe bzw. die Differenz der digitalen Signale $X(t)$ und $Y(t)$ sind.

3. Mikrowellenempfangskette nach Anspruch 2, dadurch gekennzeichnet, dass der Schätzkreis (11) einen Summierer (111) und einen Subtrahierer (112), Schwellenwertkreise (113, 114, 115) und einen logischen Kreis (117, 118, 119) aufweist, der die Funktion «ODER EXKLUSIV» der Ausgangssignale der Schwellwertkreise bildet.

**Claims**

1. A microwave receiver comprising a circuit (2) for demodulating a modulated signal resulting from mixing two carriers in quadrature modulated by digital signals, the input of which is coupled to the reception signal input, associated to an oscillator (3) operated at the carrier frequency of the reception signal, controllable so that the phase of the carrier coming from the oscillator coincides with the phase of the reception signal, that circuit supplying demodulated digital signals, and furthermore comprising a phase predictor (11) having two inputs coupled to the outputs for demodulated digital signals, the predictor output providing a signal which depends on the phase difference e between the received carrier and the local carrier, this output being connected to the control input of the oscillator (3) via a loop integrator filter (12), wherein the receiver further comprises means for automatically controlling the level of the demodulated signals X(t) and Y(t), including wide-band amplifiers (8, 9), whose signal inputs are coupled to the demodulation circuit (2) outputs, and which comprise an automatic gain control input, the outputs of these amplifiers being connected to the inputs of a control circuit (10) comprising integrating means, and the outputs of which are connected to the control inputs of the amplifiers (8, 9), characterized in that the receiver is able to receive signals $(S_R)$ which comprise the digital signals in scrambled form so as not to include long series of ones and of zeros, and that the reception signal is directly applied to the demodulation circuit (2).

2. A microwave reception chain according to claim 1, characterized in that the phase predictor (11) is a loop predictor erstablishing the function "sign of the product $X(t)Y(t) \cdot S(t) \cdot D(t)$", in which $S(t)$ and $D(t)$ respectively are the sum and the difference of the digital signals $X(t)$ and $Y(t)$.

3. A microwave reception chain according to claim 2, characterized in that the predictor (11) comprises a summing (111) and a substracting circuit (112), threshold circuits (113, 114, 115, 116) and a logic circuit (117, 118, 119) establishing the "OR EXCLUSIVE" function of the output signals of the threshold circuits.

Fig.1

Fig.2

Fig.3

Fig.5

Fig.4

SIGNE X

SIGNE

|   | + | − | − | + |   |
|---|---|---|---|---|---|
| + | + | I | I | − | + |
| − | I | I | − | + | + |
| − | I | − | + | I | − |
| + | − | + | I | I | − |
|   | + | + | − | − |   |

SIGNE S (left)   SIGNE D (right)   SIGNE Y (bottom)

## Fig.6

SIGNE X

OU EXCLUSIF

|   | 1 | 0 | 0 | 1 |   |
|---|---|---|---|---|---|
| 1 | 1 | 0 | 1 | 0 | 1 |
| 0 | 0 | 1 | 0 | 1 | 1 |
| 0 | 1 | 0 | 1 | 0 | 0 |
| 1 | 0 | 1 | 0 | 1 | 0 |
|   | 1 | 1 | 0 | 0 |   |

SIGNE S (left)   SIGNE D (right)   SIGNE Y (bottom)

## Fig.7